# EUROPÄISCHE PATENTSCHRIFT

(11) **EP 1 792 155 B1**
(45) Veröffentlichungstag und Bekanntmachung des Hinweises auf die Patenterteilung: **02.05.2012**
(21) Anmeldenummer: 05775635.5
(22) Anmeldetag: 06.09.2005
(51) Int. Cl.: G01L 23/10, G01L 9/08

(54) **DRUCKSENSOR**
PRESSURE SENSOR
CAPTEUR DE PRESSION

(30) Priorität: 22.09.2004 CH 156204
(43) Veröffentlichungstag der Anmeldung: 06.06.2007
(73) Patentinhaber: Kistler Holding AG, 8408 Winterthur (CH); Robert Bosch GmbH, 70442 Stuttgart (DE)
(72) Erfinder: WOLFER, Peter, CH-8451 Kleinandelfingen (CH); HESS, Reinhold, CH-8405 Winterthur (CH); MÜLLER, Michael, CH-8544 Rickenbach-Attikon (CH); CAVALLONI, Claudio, CH-8105 Regensdorf (CH); SALTIKOV, Pavlo, 71334 Waiblingen (DE); KERN, Christoph, 71546 Aspach (DE); LUDWIG, Thomas, 70839 Gerlingen (DE); KRÜGER, Jürgen, 71686 Remseck (DE); SCHOTT, Steffen, 71701 Schwieberdingen (DE)
(86) Internationale Anmeldenummer: PCT/CH2005/000503
(87) Internationale Veröffentlichungsnummer: WO 2006/032152

(56) Entgegenhaltungen:
- EP-A2- 0 718 612
- DE-U1- 20 301 021
- PATENT ABSTRACTS OF JAPAN Bd. 011, Nr. 370 (P-642), 3. Dezember 1987 (1987-12-03) & JP 62 140038 A (NIPPON DENSO CO LTD), 23. Juni 1987 (1987-06-23)
- PATENT ABSTRACTS OF JAPAN Bd. 009, Nr. 086 (P-349), 16. April 1985 (1985-04-16) & JP 59 216028 A (JIYUNJI ISOYAMA), 6. Dezember 1984 (1984-12-06)

## Beschreibung

### Technisches Gebiet

Die Erfindung betrifft einen Drucksensor umfassend ein Gehäuse, ein einem Druckraum aussetzbares Aufnahmeelement, welches mittels einer metallischen Membran am Gehäuse angebracht ist, sowie eine Messzelle, welche indirekt einen Druck messen kann, welcher auf das Aufnahmeelement wirkt und als daraus resultierende Kraft auf die Messzelle übertragen wird.

### Stand der Technik

Drucksensoren eingangs erwähnter Art werden seit vielen Jahren eingesetzt. In der EP 0902267 ist beispielsweise ein derartiger Drucksensor beschrieben. Bei vielen Anwendungen ist der Drucksensor aber hohen Temperaturen ausgesetzt, sodass ein Hochtemperatur-unempfindliches Messelement verwendet werden muss. In wieder anderen Beispielen ist es nicht möglich, eine derart grosse Bohrung an einem Maschinenteil anzubringen, dass ein Drucksensor darin angeordnet werden kann.

JP 58053732 offenbart einen Drucksensor für eine Spritzgussmaschine, mit einem druckübertragenden Stift.

EP 0718612 offenbart eine Zündkerze mit einem integrierten Drucksensor.

### Darstellung der Erfindung

Aufgabe der vorliegenden Erfindung ist es, einen Drucksensor anzugeben, welcher auch in kleinen Bohrungen eingesetzt werden kann.

Die Aufgabe wird gelöst durch die Kennzeichen des unabhängigen Patentanspruchs.

Die der Erfindung zugrunde liegende Idee besteht darin, dass der erfindungsgemässe Drucksensor ein Aufnahmeelement aufweist, welches als Stift ausgebildet ist und aus dem Gehäuse herausragt. Der Vorteil einer solchen Anordnung ist, dass nur eine kleine Bohrung zu einem Druckraum angebracht werden muss, um eine Druckmessung vornehmen zu können. Der Stift muss lediglich so lang sein, dass sein vorderes Ende im eingebauten Zustand mindestens etwa zur Wand des Druckraumes gelangt. Die dafür vorgesehene Bohrung muss insbesondere nicht senkrecht zur Wand des Druckraumes sein. Ein weiterer Vorteil dieser Anordnung besteht darin, dass die Messzelle nicht in unmittelbarer Nähe des Druckraumes ist und somit nicht zwingend hochtemperaturbeständig sein muss, auch wenn im Druckraum hohe Temperaturen vorherrschen.

### Kurze Beschreibung der Zeichnungen

Im Folgenden wird die Erfindung unter Beizug der Zeichnungen näher erklärt. Die Bezeichnungen sind in allen Figuren identisch. Es zeigen
- Fig. 1: eine schematische Darstellung eines Drucksensors im Aufschnitt nach dem Stand der Technik;
- Fig. 2: eine schematische Darstellung eines erfindungsgemässen Drucksensors im Aufschnitt a) mit Frontdichtung; b) mit Schulterdichtung; c) mit Beschleunigungskompensation (Antistrain); d) mit Glühfunktion; e) mit reduzierter Masse des Stiftes;
- Fig. 3: eine Teilansicht einer schematischen Darstellung eines erfindungsgemässen Drucksensors im Bereich der Membran im Aufschnitt.

### Wege zur Ausführung der Erfindung

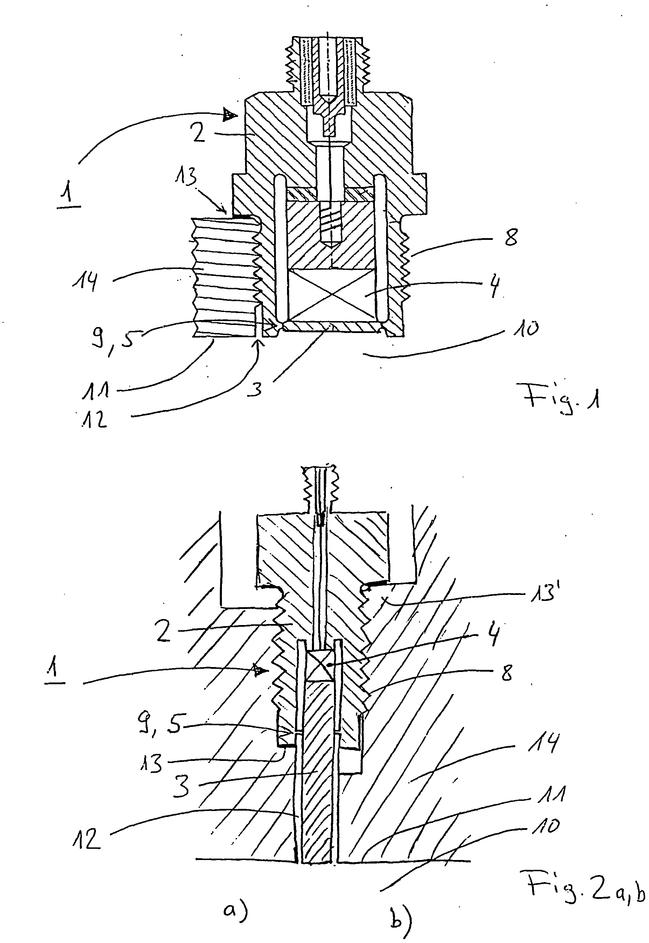

Die Fig. 1 zeigt eine schematische Darstellung eines Drucksensors 1 im Aufschnitt nach dem Stand der Technik. Er weist typischerweise ein Gehäuse 2 auf sowie eine Messzelle 4 mit einem daran anschliessend angebrachten Aufnahmeelement 3, welches einen Druck aus einem Druckraum 10 auf die Messzelle 4 übertragen kann. Das Aufnahmeelement 3, typischerweise eine dünne Platte oder Membran, ist am Gehäuse 2 an einer Schweissstelle 9 angeschweisst, welche einerseits die Funktion hat, den Innenraum des Drucksensors 1 gegenüber dem Druckraum 10 abzudichten und andererseits die Beweglichkeit des Aufnahmeelementes 3 gewährleistet. Mittels eines Gewindes 8 lässt sich der Drucksensor 1 in eine dafür vorgesehene Montageöffnung 12 in einer Wand 11 eines Werkstückes 14 anbringen, sodass die äussere Oberfläche des Aufnahmeelementes 3 etwa kontinuierlich mit der Wand 11 des Druckraums 10 verläuft. Die Abdichtungszone 13 des Druckraums 10 zum Gehäuse 2 befindet sich beispielsweise im Bereich hinter dem Gewinde 8.

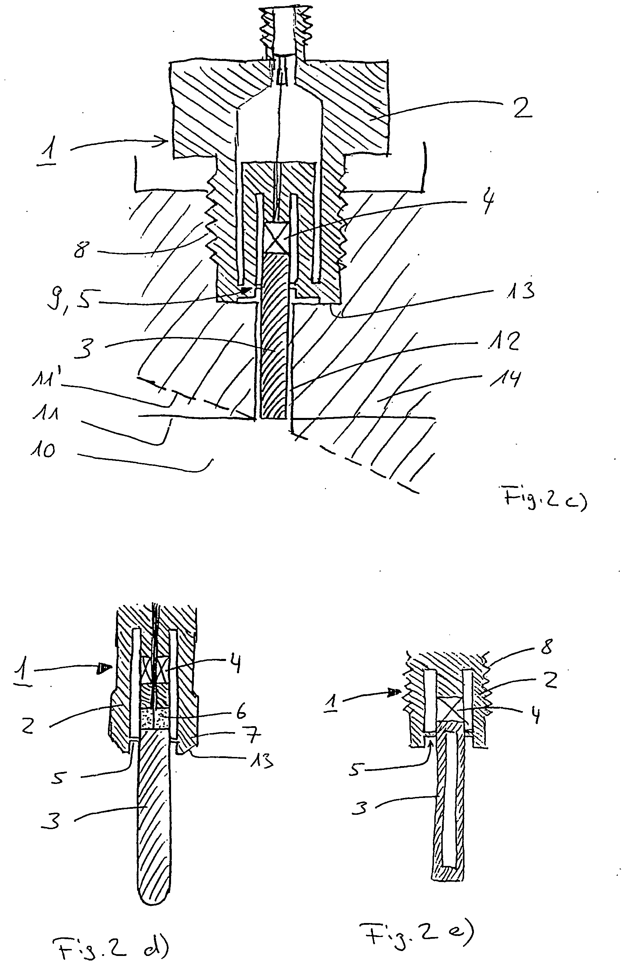

Die Fig. 2 zeigt verschiedene Varianten eines erfindungsgemässen Drucksensors 1. Dieser weist ebenfalls ein Gehäuse 2 sowie eine Messzelle 4 und ein Aufnahmeelement 3 auf. Die Messzelle 4 ist zentral im Drucksensor 1 angeordnet. Im Gegensatz zum Stand der Technik ist dieses Aufnahmeelement 3 zu einem Stift ausgestaltet, der mindestens doppelt, vorzugsweise mindestens vier mal so lang ist wie sein Durchmesser. Dieser Stift 3 ist ebenfalls zentral im Drucksensor 1 angeordnet. Ein weiterer Unterschied zum Stand der Technik besteht darin, dass das Aufnahmeelement 3 über das Gehäuse 2 hinausragt.

Die Figuren 2 a) und b), dargestellt in je einer Hälfte derselben Darstellung, unterscheiden sich in der konstruktiven Lösung der Abdichtungszone 13, 13' des Druckraums 10 zum Gehäuse 2. Diese Abdichtungszone 13, 13' kann wahlweise vor oder hinter einem Gewinde 8 angeordnet sei, sodass bei der Montage des Drucksensors 1 in eine Montageöffnung 12 eines Werkstückes 14 ein Bereich des Gehäuses 2 an einen entsprechenden Vorsprung an der Montageöffnung 12 abdichten kann.

Das Gehäuse 2 sowie jede andere Komponente des Drucksensors 1, ausser dem Aufnahmeelement 3, erreichen im eingebauten Zustand nicht die Wand 11 des Werkstückes 14 zum Druckraum 10 und sind daher auch nicht den hohen Temperaturen ausgesetzt, welche dort vorherrschen können. Dies ist vor allem ein Vorteil für die Messzelle 4.

Die Montageöffnung 12 in der Wand 11 des Werkstückes 14 kann im vordersten Bereich bis zum Druckraum 10 lediglich aus einer dünnen Bohrung bestehen, in welche das Aufnahmeelement 3 eingefügt werden kann. Die Bohrung muss daher nicht so gross sein, dass ein Drucksensor 1 darin Platz findet. So lässt sich beispielsweise ein erfindungsgemässer Drucksensor 1 in eine Zylinderkopfdichtung einbauen, die bekanntlich sehr dünn ist.

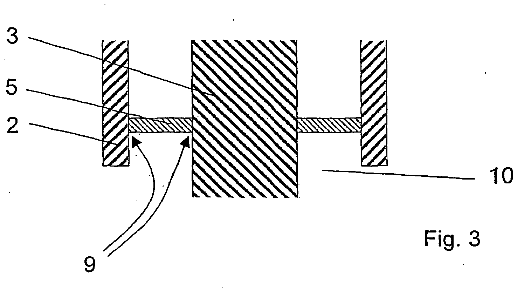

Das Aufnahmeelement 3 in der Form eines Stiftes muss zum Inneren des Drucksensors 1 gut abdichten. Dazu wird eine metallische Membran 5 verwendet, welche am Gehäuse 2 angebracht ist. Diese Membran 5 ist ringförmig ausgestaltet zu einer Ringmembran und ist in Fig. 3 in einer vergrösserten Darstellung dargestellt. Diese Ringmembran 5 umschliesst inwendig das Aufnahmeelement 3 und dichtet an seinem äusseren Rand zum Gehäuse 2 hin ab. Vorzugsweise ist diese Membran 5 mit dem Aufnahmeelement 3 und/oder mit dem Gehäuse 2 an Schweissstellen 9 verschweisst. Die Membran 5 ist flexibel genug, um eine Bewegung des Aufnahmeelementes 3 zuzulassen, welche beim Einsatz unter Druckbelastung auftritt.

Für den Einsatz im Hochtemperaturbereich sollte die Membran 5 aus einem hochtemperaturbeständigen Material bestehen, vorzugsweise aus einer Legierung auf Nickelbasis. Dank diesem Material hat eine solche Membran 5 eine sehr hohe Lebensdauer.

Vorteilhaft bei dieser Konstruktion ist, dass die Kraftnebenschlüsse minimiert werden können durch die Optimierungen der Verhältnisse der wirksamen Membranfläche (Durchmesser) zur Membrandicke. Gehäuseeffekte, wie zum Beispiel thermische Dehnungen, werden durch diese Ringmembran 5 entkoppelt.

Dadurch wird die Empfindlichkeit des Drucksensors 1 erhöht. Durch den kleinen Kraftnebenschluss fällt auch die Einbauempfindlichkeit sehr gering aus. Dank der Membrandichtung liegen die Linearität und die Hysterese unter 0.2%. Die Membran 5 wirkt wie eine Feder im Einmassenschwinger-System. Dieses System kann so optimiert werden, dass die Beschleunigungsempfindlichkeit sehr gering ist.

Als Messzelle 4 wird vorzugsweise eine piezoelektrische Messzelle 4 verwendet. Ein Druck im Druckraum 10 wirkt über das Aufnahmeelement 3 als Kraft auf die Messzelle 4. Daher wird in der erfindungsgemässe Anordnung als Messzelle 4 eine Kraftmesszelle verwendet, wodurch ein indirekt messender Drucksensor 1 entsteht.

In Fig. 2c ist ein beschleunigungskompensierter Drucksensor als Basis für den erfindungsgemässen Drucksensor 1 verwendet. Natürlich kann jeder für eine Anwendung spezialisierter Drucksensor verwendet werden. Viele konstruktive Änderungen, insbesondere in der Anbringung der Drucksensorleitung oder in der Materialwahl, sind bekannt und können mit der vorliegenden Erfindung kombiniert werden.

Die Messzelle 4 kann unabhängig von der Einbausituation vorgespannt sein. Dies ist dann von Vorteil, wenn die Messzelle 4 als fertige Komponente in ein bestehendes Gehäuse des Drucksensors 1 eingebaut werden soll.

Vorteilhaft bei dieser Konstruktion ist, dass die Kraftnebenschlüsse minimiert werden können durch die Optimierungen der Verhältnisse der wirksamen Membranfläche (Durchmesser) zur Membrandicke. Gehäuseeffekte, wie zum Beispiel thermische Dehnungen, werden durch diese Ringmembran 5 entkoppelt.

Ebenfalls in der Fig. 2c) dargestellt ist die Möglichkeit, eine zur Wand 11 des Druckraums 10 schräge, das heisst zu dieser nicht senkrechte, Montageöffnung 12 vorzusehen. Dies kann notwendig sein, wenn das Werkstück 14 mit anderen Komponenten bestückt ist, beispielsweise mit Kühl- oder Heizkanälen, welche nicht durchquert werden dürften. Der erfindungsgemässe Drucksensor 1 ist insbesondere zum Messen der Drücke in Spritzgiesswerkzeugen geeignet.

Der erfindungsgemässe Drucksensor 1 kann auch geeignet sein, einen Druck in einem Brennraum, insbesondere einem Motorenbrennraum, beispielsweise in einem Dieselmotor, zu messen. Dazu wird vorzugsweise ein Drucksensor 1 gemäss Fig. 2d) verwendet. Dieser Drucksensor 1 ist in einer Glühkerze integriert. Dabei ist das Kraft übertragende Aufnahmeelement 3 ein Glühstift der Glühkerze. Dieser Glühstift kann auch eine entsprechende Attrappe sein, welche nicht beheizt werden kann. Insbesondere kann zwischen der Messzelle 4 und dem Aufnahmeelement 3 ein Druckstiel 6 angeordnet sein, welcher die Kraft gleichsam überträgt wie das Aufnahmeelement 3. Insbesondere kann die Dichtpartie 7, an der die Abdichtungszone 13 des Druckraums 10 angebracht ist, ein vom Gehäuse 2 separates Element sein. Um die Dichtung nach wie vor zu gewährleisten, wird in diesem Fall die Membran 5 zu dieser Dichtpartie 7 ebenfalls fest abgedichtet, vorzugsweise verschweisst.

In der Fig. 2e) ist eine weitere Variante eines erfindungsgemässen Drucksensors 1 dargestellt. Bei diesem Ausführungsbeispiel wurde das Aufnahmeelement 3 hohl ausgestaltet, um dessen Masse zu reduzieren. Dadurch erhöht sich die Eigenfrequenz des Stiftes 3, was zu weniger Störungen bei Messungen führt. Die Masse kann auch verringert werden, indem ein leichtes Material, beispielsweise Titan, Keramik, verwendet wird.

### Bezugszeichenliste

- 1: Drucksensor
- 2: Gehäuse
- 3: Aufnahmeelement, Stift
- 4: Messzelle
- 5: Membran
- 6: Druckstiel
- 7: Dichtpartie
- 8: Gewinde
- 9: Schweissstelle
- 10: Druckraum
- 11 11': Wand des Druckraums
- 12: Montageöffnung in der Wand
- 13 13': Abdichtungszone des Druckraums
- 14: Werkstück

## Patentansprüche

1. Drucksensors (1) umfassend ein einem Druckraum (10) aussetzbares Aufnahmeelement (3), ein Gehäuse (2), welches abgesehen vom Aufnahmeelement (3) die gesamte äussere Hülle des Drucksensors umfasst und eine dem Druckraum zugewandte vorderste Stirnseite aufweist, wobei das Aufnahmeelement (3) mittels einer metallischen Membran (5) am Gehäuse (2) angebracht ist, sowie eine Messzelle (4), welche indirekt einen Druck messen kann, welcher auf das Aufnahmeelement (3) wirkt und als daraus resultierende Kraft auf die Messzelle (4) übertragen wird, **dadurch gekennzeichnet, dass** das Aufnahmeelement (3) als Stift ausgebildet ist und als einziges aus der Stirnseite des Gehäuses (2) herausragt.

2. Drucksensor gemäss Anspruch 1, **dadurch gekennzeichnet, dass** das Aufnahmeelement (3) mindestens doppelt, vorzugsweise mindestens vier mal so lang ist wie sein Durchmesser.

3. Drucksensor gemäss Anspruch 1 oder 2, **dadurch gekennzeichnet, dass** die Messzelle (4) eine piezoelektrische Messzelle ist.

4. Drucksensor gemäss einem der vorhergehenden Ansprüche, **dadurch gekennzeichnet, dass** die Messzelle (4) eine Kraftmesszelle ist.

5. Drucksensor gemäss einem der vorergehenden Ansprüche, **dadurch gekennzeichnet, dass** die Messzelle (4) zentral im Drucksensor (1) angeordnet ist.

6. Drucksensor gemäss einem der vorhergehenden Ansprüche, **dadurch gekennzeichnet, dass** die Membran (5) mit dem Stift (3) verschweisst ist.

7. Drucksensor gemäss einem der vorhergehenden Ansprüche, **dadurch gekennzeichnet, dass** die Membran (5) mit dem Gehäuse (2) verschweisst ist.

8. Drucksensor gemäss einem der vorhergehenden Ansprüche, **dadurch gekennzeichnet, dass** die Membran (5) mit einer Dichtpartie (7) verschweisst ist, welche zwischen dem Druckraum (10) und einer für den Drucksensor (1) vorgesehenen Montageöffnung (12) abdichtet.

9. Drucksensor gemäss einem der vorhergehenden Ansprüche, **dadurch gekennzeichnet, dass** die Messzelle (4) unabhängig von Einbaubedingungen des Drucksensors (1) vorgespannt ist.

10. Drucksensor gemäss einem der vorhergehenden Ansprüche, **dadurch gekennzeichnet, dass** die Membran (5) im Wesentlichen ringförmig ausgestaltet ist.

11. Drucksensor gemäss einem der vorhergehenden Ansprüche, **dadurch gekennzeichnet, dass** die Membran (5) aus einem hochtemperaturbeständigen Material, vorzugsweise aus einer Legierung auf Nickelbasis besteht.

12. Drucksensor gemäss einem der vorhergehenden Ansprüche, **dadurch gekennzeichnet, dass** der Drucksensor () geeignet ist, einen Druck in einem Brennraum, insbesondere in einem Motorenbrennraum zu messen.

13. Drucksensor gemäss Anspruch 12, **dadurch gekennzeichnet, dass** der Drucksensor (1) in einer Glühstiftkerze integriert ist.

14. Drucksensor gemäss einem der vorhergehenden Ansprüche, **dadurch gekennzeichnet, dass** der Drucksensor (1) geeignet ist, einen Druck in einem Spritzgiesswerkzeug zu messen.

15. Drucksensor gemäss einem der vorhergehenden Ansprüche, **dadurch gekennzeichnet, dass** der Drucksensor (1) geeignet ist, in einer Zylinderkopfdichtung eingebaut zu werden.

## Claims

1. A pressure sensor (1) comprising a receiving element (3) that is exposable to a pressure chamber (10), a housing (2) comprising the entire outer casing of the pressure sensor with the exception of the receiving element (3) and having a foremost front end facing the pressure chamber, wherein said receiving element (3) is attached to the housing (2) by means of a metallic membrane (5), as well as a measuring cell (4) capable of indirectly measuring a pressure acting on the receiving element (3) that is transmitted to the measuring cell (4) as a resultant force **characterized in that** the receiving element (3) is embodied as a pin and is the only component that protrudes beyond the front end of the housing (2).

2. A pressure sensor according to claim 1 **characterized in that** the length of the receiving element (3) is at least twice, preferably at least four times its diameter.

3. A pressure sensor according to claim 1 or 2 **characterized in that** the measuring cell (4) is a piezoelectric measuring cell.

4. A pressure sensor according to any of the preceding claims **characterized in that** the measuring cell (4) is a load cell.

5. A pressure sensor according to any of the preceding claims **characterized in that** the measuring cell (4) is arranged centrally within the pressure sensor (1).

6. A pressure sensor according to any of the preceding claims **characterized in that** the membrane (5) is welded to the pin (3).

7. A pressure sensor according to any of the preceding claims **characterized in that** the membrane (5) is welded to the housing (2).

8. A pressure sensor according to any of the preceding claims **characterized in that** the membrane (5) is welded to a sealing portion (7) that forms a seal between the pressure chamber (10) and a mounting opening (12) provided for the pressure sensor (1).

9. A pressure sensor according to any of the preceding claims **characterized in that** the measuring cell (4) is prestressed independently of the installation conditions of the pressure sensor (1).

10. A pressure sensor according to any of the preceding claims **characterized in that** the membrane (5) is essentially annular in shape.

11. A pressure sensor according to any of the preceding claims **characterized in that** the membrane (5) is made of a high-temperature resistant material, preferably from an alloy on the basis of nickel.

12. A pressure sensor according to any of the preceding claims **characterized in that** the pressure sensor (1) is adapted to measure a pressure in a combustion chamber, particularly in a combustion chamber of an engine.

13. A pressure sensor according to claim 12 **characterized in that** the pressure sensor (1) is integrated in a heater plug.

14. A pressure sensor according to any of the preceding claims **characterized in that** the pressure sensor (1) is adapted to measure the pressure in an injection moulding tool.

15. A pressure sensor according to any of the preceding claims **characterized in that** the pressure sensor (1) is adapted to be built into a cylinder head gasket.

## Revendications

1. Un capteur de pression (1) comprenant un élément de réception (3) apte à être exposé à une chambre de pression (10), un boîtier (2) comprenant toute l'enveloppe extérieure du capteur de pression à l'exception de l'élément de réception (3) et ayant un front le plus avancé orienté vers le chambre de pression, dans lequel ledit élément de réception (3) est installé au boîtier (2) par l'intermédiaire d'une membrane métallique (5), ainsi qu'au moins un élément de mesure (4) capable de mesurer indirectement une pression agissant sur l'élément de réception (3) et transmise en tant qu'une force résultante à l'élément de mesure (4) **caractérisé en ce que** l'élément de réception (3) a la forme d'une broche et est le seul qui dépasse du front du boîtier (2).

2. Un capteur de pression selon la revendication 1 **caractérisé en ce que** la longueur de l'élément de réception (3) est au moins deux fois, préférentiellement quatre fois son diamètre.

3. Un capteur de pression selon la revendication 1 ou 2 **caractérisé en ce que** l'élément de mesure (4) est un élément de mesure piézoélectrique.

4. Un capteur de pression selon l'une quelconque des revendications précédentes **caractérisé en ce que** l'élément de mesure (4) est un élément de mesure de force.

5. Un capteur de pression selon l'une quelconque des revendications précédentes **caractérisé en ce que** l'élément de mesure (4) est disposé centralement au sein du capteur de pression (1).

6. Un capteur de pression selon l'une quelconque des revendications précédentes **caractérisé en ce que** la membrane (5) est soudée à la broche (3).

7. Un capteur de pression selon l'une quelconque des revendications précédentes **caractérisé en ce que** la membrane (5) est soudée au boîtier (2).

8. Un capteur de pression selon l'une quelconque des revendications précédentes **caractérisé en ce que** la membrane (5) est soudée une partie d'étanchéité (7) étanchéifiant entre la chambre du pression (10) et une aperture de montage (12) pourvue pour le capteur de pression (1).

9. Un capteur de pression selon l'une quelconque des revendications précédentes **caractérisé en ce que** ledit élément de mesure (4) est précontraint indépendamment des conditions de montage du capteur de pression (1).

10. Un capteur de pression selon l'une quelconque des revendications précédentes **caractérisé en ce que** ladite membrane (5) est essentiellement d'une forme annulaire.

11. Un capteur de pression selon l'une quelconque des revendications précédentes **caractérisé en ce que** ladite membrane (5) est fabriquée d'un matériau résistant aux températures très élevées, de préférence d'un alliage à base de nickel.

12. Un capteur de pression selon l'une quelconque des revendications précédentes **caractérisé en ce que** ledit capteur de pression (1) est apte à mesurer une pression dans une chambre de combustion, en particulier dans une chambre de combustion d'un moteur.

13. Un capteur de pression selon la revendication 12 **caractérisé en ce que** ledit capteur de pression (1) est intégré dans une bougie crayon de préchauffage.

14. Un capteur de pression selon l'une quelconque des revendications précédentes **caractérisé en ce que** ledit capteur de pression (1) est apte à mesurer une pression dans une machine de moulage par injection.

15. Un capteur de pression selon l'une quelconque des revendications précédentes **caractérisé en ce que** ledit capteur de pression (1) est apte à être logé dans un joint de culasse.
